# FASCICULE DE BREVET EUROPEEN

(11) **EP 1 429 479 B1**
(45) Date de publication et mention de la délivrance du brevet: **13.01.2010**
(21) Numéro de dépôt: 03293030.7
(22) Date de dépôt: 04.12.2003
(51) Int. Cl.: H04B 10/22, F41G 7/26

(54) **Procédé et dispositif pour la réalisation d'une liaison optique par impulsions laser.**
Verfahren und Vorrichtung zur Realisierung einer optischen Verbindung mit Laserpulsen
Method and device for realising an optical link with laser pulses

(30) Priorité: 10.12.2002 FR 0215583
(43) Date de publication de la demande: 16.06.2004
(73) Titulaire: MBDA France, 75116 Paris (FR)
(72) Inventeur: Teneze, Bernard, 18570 Trouy (FR); Bernoux, Frank, 94240 L'Hay-les-Roses (FR)
(74) Mandataire: Bonnetat, Christian

(56) Documents cités:
- DE-A- 3 421 141
- FR-A- 2 274 887
- US-A- 3 829 047
- US-B1- 6 466 041

## Description

La présente invention concerne un procédé et un dispositif pour la réalisation d'une liaison optique par impulsions lumineuses entre l'émetteur desdites impulsions et un récepteur de celles-ci, tout particulièrement appropriée à être mise en oeuvre dans les dispositifs de localisation et de guidage de missiles, tels que par exemple celui décrit dans le document US-4 710 028 (FR-2 583 523).

Dans les dispositifs connus de ce type, l'émetteur desdites impulsions lumineuses, qui peut être monté à bord dudit missile ou bien être disposé à poste fixe, la liaison optique comportant alors un miroir monté à bord du missile et renvoyant lesdites impulsions lumineuses vers ledit détecteur, est généralement une lampe à éclats, volumineuse et consommant une énergie importante.

De ce fait, on a déjà pensé à remplacer ladite lampe à éclats par une source laser. Mais alors, l'énergie laser émise doit être importante pour assurer une liaison optique de grande portée, résistant à un éventuel brouillage. Il en résulte donc non seulement des risques oculaires importants pour les opérateurs desdits dispositifs, mais encore des sources laser de forte puissance.

La présente invention a pour objet de remédier à ces inconvénients en permettant de réaliser une liaison optique laser, à faibles risques oculaires et à faible consommation d'énergie.

A cette fin, selon l'invention, le procédé pour la réalisation d'une liaison optique par impulsions laser entre l'émetteur desdites impulsions et un récepteur de celles-ci, ladite liaison optique étant utilisée par un dispositif de localisation pour localiser un mobile s'éloignant dudit dispositif de localisation, est remarquable en ce que le début de l'émission desdites impulsions laser est retardé par rapport au départ du mobile et en ce qu'on fait varier l'énergie desdites impulsions laser successives comme une fonction croissante du temps qui s'écoule depuis le début de l'émission desdites impulsions laser.

Ainsi, on évite tout risque oculaire avant et pendant le départ du mobile, puisqu'aucune énergie laser n'est émise avant ledit départ et que l'émission des impulsions laser est retardée, par rapport au départ du mobile, jusqu'au moment où elle est réellement nécessaire à la localisation du mobile. Ensuite, l'émetteur émet une énergie réduite qui augmente progressivement avec la distance émetteur-récepteur, l'énergie nécessaire à la portée maximale du mobile n'étant émise qu'en fin de portée, c'est-à-dire dans une zone où ne se trouve aucun opérateur.

On remarquera que le document US-4 013 244 décrit un dispositif de contrôle d'un faisceau optique guidant un missile vers une cible, dispositif dans lequel, pour des raisons techniques différentes des risques oculaires rappelés ci-dessus, l'énergie dudit faisceau de guidage est augmentée pendant le vol dudit missile par asservissement à une loi désirée.

Dans la présente invention, au contraire, la montée en puissance dudit émetteur est prédéterminée en fonction du temps, de sorte qu'aucun asservissement n'est nécessaire. De plus, grâce à l'invention, cette montée en puissance peut être relativement lente, rendant la liaison pratiquement insensible aux perturbations électromagnétiques.

La source laser peut être une diode laser. Cependant, pour réduire l'énergie émise par l'émetteur et donc compléter la protection contre les risques oculaires, il est avantageux que celui-ci comporte un laser VCSEL (Vertical Cavity Surface Emitting Laser). En effet, un tel laser semiconducteur, à substrat d'arséniure de gallium, émet un faisceau faiblement divergent (+ ou - 7°), ce qui permet de confiner l'énergie émise dans un cône juste nécessaire à la localisation du mobile. Le volume illuminé par l'émetteur, dans lequel un risque oculaire serait possible, est donc très réduit. De plus, le rendement de conversion d'un laser VCSEL, entre l'énergie reçue et l'énergie fournie, est particulièrement bon, de sorte que l'énergie électrique consommée peut être réduite.

Par ailleurs, pour que le niveau de réception des impulsions laser par le récepteur soit constant, il est nécessaire que l'énergie émise par l'émetteur varie comme le carré de la distance émetteur-récepteur.

Aussi, dans le cas où le mobile se déplace à vitesse constante, on fait varier l'énergie desdites impulsions laser successives comme le carré du temps écoulé depuis le début de l'émission desdites impulsions.

A cet effet, on peut utiliser un condensateur dont les décharges successives alimentent ledit émetteur pour produire lesdites impulsions laser successives et dont les charges successives sont commandées par des créneaux de charge successifs dont les durées sont une fonction linéairement croissante du temps.

Ainsi, l'énergie délivrée par le condensateur à la diode laser ou au laser VCSEL dudit émetteur est égale à 1/2 C V² (C étant la capacité du condensateur en Farads et V la tension de décharge en volts dudit condensateur), c'est-à-dire directement proportionnelle au carré du temps écoulé.

Grâce à la présente invention, on obtient donc :
- une réduction de l'énergie émise et consommée. En effet, grâce à la diode laser, l'émission de l'énergie directement vers le récepteur et son confinement dans le cône exigé, permet d'économiser cette énergie, par rapport à l'énergie émise sur 4n stéradians par une lampe à éclats et plus ou moins bien redirigée vers le récepteur par un miroir et une lentille complexe. Une bande spectrale étroite émise (quelques nm) peut être entièrement incluse dans une bande spectrale de haute sensibilité du récepteur, contrairement à la large bande spectrale émise par une lampe à éclats (> 1000 nm) dans laquelle une grande partie de l'énergie est perdue au niveau du récepteur. A niveau de signal reçu identique, l'énergie émise par une source cohérente peut donc être beaucoup plus faible que l'énergie émise par une lampe à large spectre. Une diode laser ou un laser VCSEL possède par ailleurs un bien meilleur rapport de conversion énergie émise / énergie consommée et ne nécessite pas de haute tension ni de très haute tension d'amorçage. La réduction de l'énergie électrique consommée est donc très importante ;
- une réduction de la masse et de l'encombrement. Une diode laser ou un laser VCSEL étant beaucoup moins volumineux qu'une lampe à éclats, nécessitant un circuit d'alimentation électrique plus simple (pas de convertisseur haute tension et très haute tension) et consommant moins d'énergie, on peut réaliser un émetteur moins volumineux et moins lourd qu'avec une lampe à éclats ;
- la réduction de l'éblouissement du récepteur. Comme l'énergie émise est faible au départ, le capteur utilisé par le récepteur n'est pas ébloui et le niveau de signal au niveau du récepteur est plus régulier au cours de l'éloignement du mobile ;
- la réduction de l'émissivité électromagnétique. La tension utilisée et l'énergie mise en jeu avec une diode laser ou un laser VCSEL étant bien plus faibles que celles d'une lampe à éclats, l'émissivité électromagnétique d'un laser est beaucoup plus faible que celle d'un émetteur à éclats ;
- une amélioration de la sélectivité spectrale. Une source ayant une longueur d'onde d'émission très étroite permet de réduire la bande spectrale du récepteur et d'améliorer ainsi le rapport signal sur fond.

Les figures du dessin annexé feront bien comprendre comment l'invention peut être réalisée. Sur ces figures, des références identiques désignent des éléments semblables.
La figure 1 illustre schématiquement la localisation d'un missile.
La figure 2 est le schéma synoptique de l'émetteur d'impulsions laser monté à bord dudit missile.
Les figures 3A, 3B et 3C sont des diagrammes temporels illustrant le fonctionnement de l'émetteur de la figure 2.

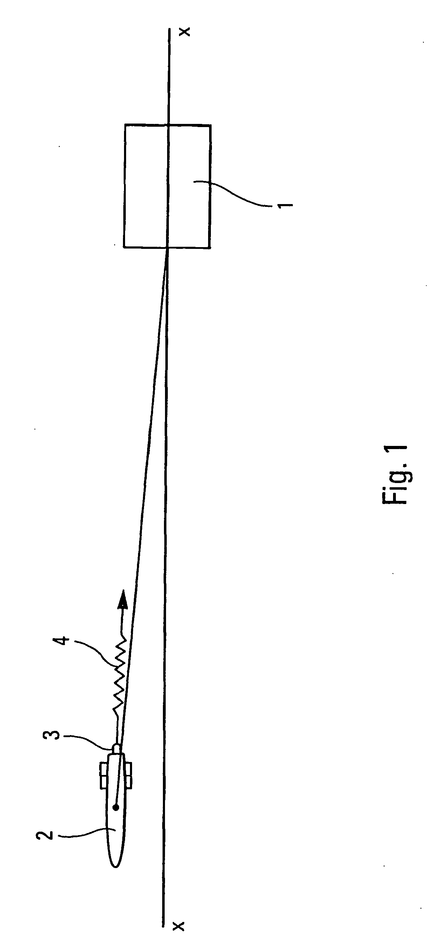

Sur la figure 1, on a représenté un dispositif 1 apte à localiser un missile 2 par rapport à un axe de référence X-X (par exemple un axe de visée), ledit missile 2 s'éloignant à vitesse constante du dispositif de localisation 1. Ce dernier est par exemple du type décrit dans le document US-4 710 028 (FR-2 583 523).

Aux fins de sa localisation par le dispositif 1, le missile 2 comporte une source laser 3, du type diode laser ou laser VCSEL, apte à émettre des impulsions laser 4 en direction dudit dispositif 1.

Le dispositif 5, monté à bord du missile 1 et destiné à la commande de la source laser 3 comporte un condensateur 6 monté en parallèle sur ladite source laser 3 et apte à être chargé à partir d'une source de tension 7, par l'intermédiaire d'un interrupteur commandé 8. De même, le circuit de la source laser 3, qui comporte une résistance de charge 9, se ferme par l'intermédiaire d'un interrupteur commandé 10.

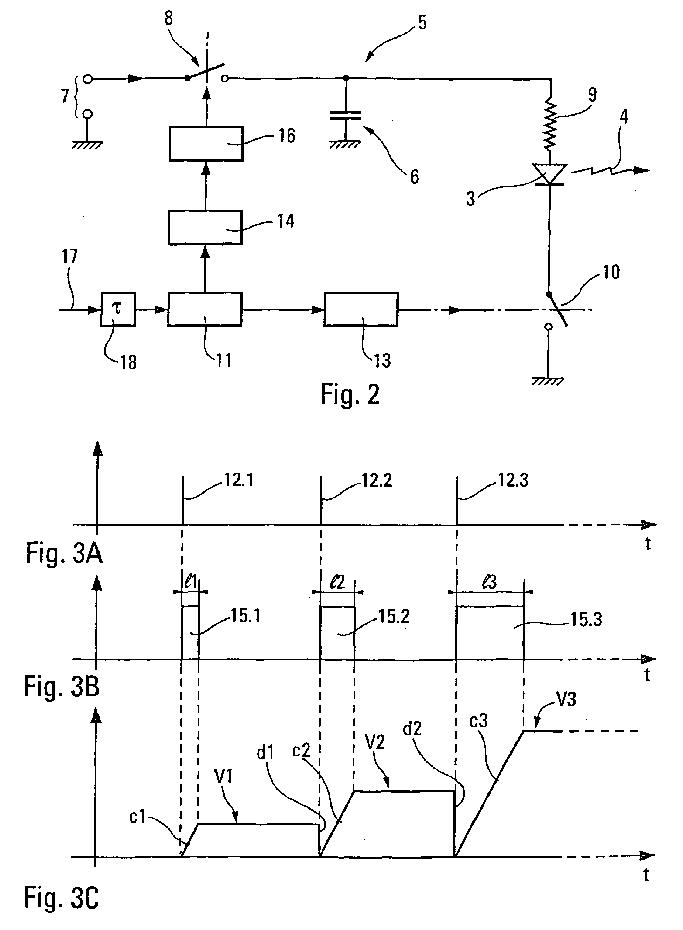

Le dispositif 5 comporte, de plus, un générateur 11 de tops périodiques 12 (voir la figure 3A), apte à commander à la fermeture l'interrupteur commandé 10 par l'intermédiaire d'un dispositif de commande 13. Par ailleurs, le générateur de tops 11 commande un générateur 14 d'impulsions 15 à largeur variable (voir la figure 3B), qui, lui-même, commande l'interrupteur commandable 8, par l'intermédiaire d'un système de commande 16. Le générateur 14 est tel qu'il émet une impulsion en réponse à la réception d'un top 12 et que la largeur des impulsions 15 augmente linéairement en fonction du temps t.

Avant le départ du missile 2, aucune impulsion laser 4 n'est émise par la source laser 3. Il n'existe donc aucun risque oculaire, même dans l'environnement immédiat du missile 2.

Lors du départ du missile 2, un ordre de commande est adressé au générateur de tops 11 par une ligne de commande 17 sur laquelle est interposé un dispositif de temporisation 18. On peut ainsi retarder l'émission de la source laser 3, jusqu'au moment où les impulsions laser 4 sont réellement nécessaires à la localisation du missile 2 par le dispositif 1.

Lorsque la temporisation réalisée par le dispositif 18 est écoulée, le générateur 11 engendre un premier top 12.1 qui :
- ferme pour quelques courts instants l'interrupteur 10 par l'intermédiaire du dispositif de commande 13, de sorte qu'une éventuelle charge dans le condensateur 6 peut se décharger à travers la source laser 3, par l'intermédiaire de la résistance de charge 9, après quoi ledit interrupteur 10 s'ouvre de nouveau immédiatement ; et
- commande le générateur 14 qui engendre un premier créneau 15.1, de largeur temporelle ℓ1, permettant de fermer l'interrupteur 8 pendant la durée ℓ1, de sorte que le condensateur 6 se charge à partir de la source 7 pendant ladite durée (voir c1 sur la figure 3C). A l'expiration de la durée ℓ1, le condensateur 6 s'est chargé au niveau de tension V1, qu'il maintient jusqu'à l'apparition du top suivant 12.2.

Lorsque le générateur 11 émet ce top suivant 12.2, comme précédemment, l'interrupteur 10 se ferme instantanément pour quelques courts instants, de sorte que la charge à la tension V1 du condensateur 6 se décharge à travers la source 3 (voir le segment d1 sur la figure 3C) qui émet une impulsion laser 4, tandis que le générateur 14 engendre un deuxième créneau 15.2 de largeur ℓ2 égale à ℓ2 = ℓ1 +δt (δt constante de durée, la largeur du créneau varie linéairement avec le temps). Il en résulte que la largeur ℓ2 a crû de façon linéaire avec le temps t, par rapport à la largeur ℓ1. En conséquence, l'interrupteur 10 étant réouvert, le condensateur 6 se charge pendant la durée temporelle ℓ2 (voir segment c2 sur la figure 3C) jusqu'à la tension V2=kV1. Cette tension V2 se maintient jusqu'à l'apparition du troisième top 12.3.

Il se produit alors le même phénomène que dans le paragraphe précédent, la charge à la tension V2 du condensateur 6 se décharge à travers la source 3 (segment d2) émettant une impulsion laser 4, après quoi ce condensateur se charge à la tension V3 = kV2 pendant le troisième créneau 15.3, dont la largeur temporelle ℓ3 est égale à ℓ2 + δt ...

Ainsi, les impulsions lumineuses successives 4 résultent de décharges (d1, d2, ...) à des tensions V1, V2, V3, ... linéairement croissantes avec le temps t, de sorte que leur énergie est croissante avec le carré du temps.

## Revendications

1. Procédé pour la localisation d'un mobile (2) s'éloignant d'un dispositif de localisation, ledit procédé mettant en oeuvre une liaison optique par impulsions laser (4) entre ledit dispositif de localisation et ledit mobile et ladite liaison optique comportant un émetteur (3) desdites impulsions laser (4), disposé dans ledit mobile (2) ou dans ledit dispositif de localisation, et un récepteur (1) desdites impulsions laser (4), disposé dans ledit dispositif de localisation,
**caractérisé en ce que** le début de l'émission desdites impulsions laser (4) est retardé par rapport au départ dudit mobile (2) et **en ce qu'**on fait varier l'énergie desdites impulsions laser successives (4) comme une fonction croissante du temps (t) qui s'écoule depuis le début de l'émission desdites impulsions laser.

2. Procédé selon la revendication 1, dans lequel ledit mobile (2) se déplace à vitesse constante,
**caractérisé en ce qu'**on fait varier l'énergie desdites impulsions laser successives (4) comme le carré du temps (t) écoulé depuis le début de l'émission desdites impulsions.

3. Dispositif pour la localisation d'un mobile (2) s'éloignant dudit dispositif de localisation, ledit dispositif comportant une liaison optique par impulsions laser (4) entre ledit dispositif de localisation et ledit mobile et ladite liaison optique comportant un émetteur (3) desdites impulsions laser (4), disposé dans ledit mobile (2) ou dans ledit dispositif de localisation, et un récepteur (1) desdites impulsions laser (4), disposé dans ledit dispositif de localisation,
**caractérisé en ce qu'**il comporte des moyens (18) pour retarder le début de l'émission desdites impulsions laser (4) par rapport au départ dudit mobile (2) et des moyens (5) pour faire varier l'énergie desdites impulsions successives (4) comme une fonction croissante du temps qui s'écoule depuis le début de l'émission desdites impulsions laser (4).

4. Dispositif selon la revendication 3,
**caractérisé en ce que** ledit émetteur (3) comporte au moins une diode laser.

5. Dispositif selon la revendication 3,
**caractérisé en ce que** ledit émetteur (3) comporte au moins un laser VCSEL.

6. Dispositif selon l'une des revendications 3 à 5, dans lequel ledit mobile (2) se déplace à vitesse constante,
**caractérisé en ce que** lesdits moyens (5) font varier l'énergie desdites impulsions laser successives (4) comme le carré du temps écoulé depuis le début de l'émission desdites impulsions.

7. Dispositif selon la revendication 6,
**caractérisé en ce qu'**il comporte un condensateur (6) dont les décharges successives (d1, d2, d3, ...) alimentent ledit émetteur (3) pour produire lesdites impulsions laser successives (4) et dont les charges successives (c1, c2, c3, ...) sont commandées par des créneaux de charge successifs (15.1, 15.2, 15.3, ...) dont les durées (ℓ1, ℓ2, ℓ3, ...) sont une fonction linéairement croissante du temps (t).

## Claims

1. A method for locating a moving body (2) moving away from a locating device, said method using an optical link with laser pulses (4) between said locating device and said moving body and said optical link comprising an emitter (3) of said laser pulses (4), disposed in said moving body (2) or in said locating device, and a receiver (1) of said laser pulses (4), disposed in said locating device, **characterized in that** the start of emission of said laser pulses (4) is delayed with respect to the departure of said moving body (2) and **in that** the energy of said successive laser pulses (4) is varied as an increasing function of the time (t) elapsing since the start of emission of said laser pulses.

2. The method as claimed in claim 1, wherein said moving body (2) moves at constant speed, **characterized in that** the energy of said successive laser pulses (4) is varied in proportion to the square of the time (t) elapsed since the start of emission of said pulses.

3. A device for locating a moving body (2) moving away from said locating device, said locating device comprising an optical link with laser pulses (4) between said locating device and said moving body and said optical link comprising an emitter (3) of said laser pulses (4), disposed in said moving body or in said locating device, and a receiver (1) of said laser pulses (4), disposed in said locating device,
**characterized in that** it comprises means (18) for delaying the start of emission of said laser pulses (4) with respect to the departure of said moving body (2) and means (5) for varying the energy of said successive pulses (4) as an increasing function of the time (t) elapsing since the start of emission of said laser pulses (4).

4. The device as claimed in claim 3, **characterized in that** said emitter (3) comprises at least one laser diode.

5. The device as claimed in claim 3, **characterized in that** said emitter (3) comprises at least one VCSEL laser.

6. The device as claimed in one of claims 3 to 5, wherein said moving body (2) moves at constant speed,
**characterized in that** said means (5) varies the energy of said successive laser pulses (4) in proportion to the square of the time elapsed since the start of emission of said pulses.

7. The device as claimed in claim 6,
**characterized in that** it comprises a capacitor (6) whose successive discharges (d1, d2, d3, ...) supply said emitter (3) in order to produce said successive laser pulses (4) and whose successive chargings (c1, c2, c3, ...) are controlled by successive rectangular charging pulses (15.1, 15.2, 15.3, ...) whose durations (ℓ1, ℓ2, ℓ3, ...) are a linearly increasing function of time (t).

## Patentansprüche

1. Verfahren zum Lokalisieren eines Mobilelements (2). das sich von einer Lokalisierungsvorrichtung entfernt, wobei das Verfahren eine optische Verbindung durch Laserimpulse (4) zwischen der Lokalisierungsvorrichtung und dem Mobilelement einsetzt und die optische Verbindung einen Sender (3) der Laserimpulse (4), der in dem Mobilelement (2) oder in der Lokalisierungsvorrichtung angeordnet ist, und einen Empfänger (1) der Laserimpulse (4), der in der Lokalisierungsvorrichtung angeordnet ist, umfasst,
**dadurch gekennzeichnet, dass** der Beginn der Sendung der Laserimpulse (4) im Verhältnis zum Start des Mobilelements (2) verzögert wird und dass die Energie der aufeinanderfolgenden Laserimpulse (4) als steigende Funktion der Zeit (t), die seit dem Beginn der Sendung der Laserimpulse abläuft, variiert wird.

2. Verfahren nach Anspruch 1, wobei das Mobilelement (2) sich mit konstanter Geschwindigkeit fortbewegt,
**dadurch gekennzeichnet, dass** die Energie der aufeinanderfolgenden Laserimpulse (4) als Quadrat der Zeit (t), die seit dem Beginn der Sendung der Impulse abläuft, variiert wird.

3. Vorrichtung zum Lokalisieren eines Mobilelements (2), das sich von der Lokalisierungsvorrichtung entfernt, wobei die Vorrichtung eine optische Verbindung durch Laserimpulse (4) zwischen der Lokalisierungsvorrichtung und dem Mobilelement umfasst und die optische Verbindung einen Sender (3) der Laserimpulse (4), der in dem Mobilelement (2) oder in der Lokalisierungsvorrichtung angeordnet ist, und einen Empfänger (1) der Laserimpulse (4), der in der Lokalisierungsvorrichtung angeordnet ist, umfasst,
**dadurch gekennzeichnet, dass** sie Mittel (18), um den Beginn der Sendung der Laserimpulse (4) im Verhältnis zum Start des Mobilelements (2) zu verzögern, und Mittel (5), um die Energie der aufeinanderfolgenden Impulse (4) als steigende Funktion der Zeit, die seit Beginn der Sendung der Laserimpulse (4) abläuft, zu variieren, umfasst.

4. Vorrichtung nach Anspruch 3,
**dadurch gekennzeichnet, dass** der Sender (3) mindestens eine Laserdiode umfasst.

5. Vorrichtung nach Anspruch 3,
**dadurch gekennzeichnet, dass** der Sender (3) mindestens einen VCSEL-Laser umfasst.

6. Vorrichtung nach einem der Ansprüche 3 bis 5, wobei das Mobilelement (2) sich mit konstanter Geschwindigkeit fortbewegt,
**dadurch gekennzeichnet, dass** die Mittel (5) die Energie der aufeinanderfolgenden Laserimpulse (4) als Quadrat der Zeit, die seit Beginn der Sendung der Impulse abläuft, variieren.

7. Vorrichtung nach Anspruch 6,
**dadurch gekennzeichnet, dass** sie eine Kapazität (6) umfasst, deren aufeinanderfolgende Entladungen (d1, d2, d3, ...) den Sender (3) speisen, um die aufeinanderfolgenden Laserimpulse (4) zu erzeugen, und deren aufeinanderfolgende Ladungen (c1, c2, c3, ...) durch aufeinanderfolgende Laderechteckimpulse (15.1, 15.2, 15.3, ...) gesteuert werden, deren Dauer (ℓ1, ℓ2, ℓ3, ...) eine linear steigende Funktion der Zeit (t) ist.
